# FASCICULE DE BREVET EUROPEEN

(11) **EP 3 134 604 B1**
(45) Date de publication et mention de la délivrance du brevet: **28.02.2018**
(21) Numéro de dépôt: 15717513.4
(22) Date de dépôt: 24.04.2015
(51) Int. Cl.: E21B 28/00, E21B 43/00

(54) **SONDE DE GÉNÉRATION D'ONDES SISMIQUES**
SONDE ZUR ERZEUGUNG VON SEISMISCHEN WELLEN
PROBE FOR GENERATING SEISMIC WAVES

(30) Priorité: 25.04.2014 FR 1453770
(43) Date de publication de la demande: 01.03.2017
(73) Titulaire: ENE29 S.à r.l., 2453 Luxembourg (LU)
(72) Inventeur: MONCHO, Salvador, F-92240 Malakoff (FR); INNOCENTI, Nicolas, 31450 MONTLAUR (FR); FERIOL, Laurent, F-31650 Lauzerville (FR); DELCHAMBRE, Michaël, F-31100 Toulouse (FR)
(74) Mandataire: Cabinet BARRE LAFORGUE & associés
(86) Numéro de dépôt international: PCT/EP2015/058961
(87) Numéro de publication internationale: WO 2015/162266

(56) Documents cités:
- US-A1- 2012 043 075

## Description

L'invention concerne une sonde de génération d'ondes sismiques et plus particulièrement une telle sonde utilisant un éclateur à haute puissance alimenté par des batteries de condensateurs pour générer de telles ondes sismiques. L'invention porte également sur un agencement des batteries de condensateurs dans une telle sonde.

Dans l'exploration comme dans l'exploitation pétrolière, géologique ou minière, il est usuel d'employer des sondes qui sont descendues dans un puits de forage jusqu'à une profondeur prédéterminée et qui servent à émettre, au sein de la roche, des ondes de choc ou de pression, plus généralement désignées par ondes sismiques, qui se propagent dans la roche, soit pour détecter par réflexion ou réfraction des ruptures de continuité dans la couche rocheuse (en exploration) soit pour déloger une ressource (gaz ou pétrole) et permettre de l'extraire (en exploitation).

On connait, par exemple des documents US 4,345,650 ou US 2012/0043075 une telle sonde générant des ondes sismiques au moyen d'un arc électrique de forte puissance. Une telle sonde se présente généralement sous la forme d'un corps tubulaire allongé, d'un diamètre de l'ordre de 10 à 30 cm et d'une longueur pouvant atteindre une dizaine de mètres, voire davantage. Une première extrémité du corps de la sonde est reliée à un câble qui assure une double fonction, d'une part de liaison mécanique entre la sonde et un système de treuil en surface pour pouvoir faire descendre et remonter la sonde à l'intérieur du puits de forage, et d'autre part d'alimentation électrique de la sonde à partir d'un générateur électrique lui aussi placé à la surface.

Le câble d'alimentation électrique est relié à un module électrique et électronique contenu dans une première partie du corps au voisinage de cette première extrémité et comprenant par exemple des moyens de commande et d'alimentation d'une batterie de condensateurs accumulant l'énergie fournie sous haute tension. Cette batterie de condensateurs occupe la partie centrale du corps de la sonde et est connectée à un éclateur placé à l'extrémité du corps opposée au câble.

Lorsque la batterie de condensateurs se décharge au travers de l'éclateur, un arc électrique de forte puissance est généré et vaporise un fluide, en général de l'eau, baignant les électrodes de l'éclateur. Cette vaporisation instantanée, de nature quasi explosive génère des ondes "sismiques" de choc et/ou de pression qui se diffusent autour de l'éclateur, au travers du liquide remplissant le puits de forage, et dans la roche avoisinante.

Afin d'obtenir une portée améliorée des ondes sismiques ainsi générée, ainsi qu'une efficacité accrue, le facteur limitatif essentiel est l'énergie stockée dans la batterie de condensateurs et déchargée dans l'éclateur. Cependant, dans les sondes connues, l'agencement des condensateurs présente de nombreux inconvénients : leur raccordement est complexe et leur installation dans le corps de la sonde n'est pas optimum. En outre, les risques de court-circuit ou d'arc parasite entre les bornes de condensateurs voisins ou avec les éléments métalliques de la sonde ne sont pas négligeables et s'accroissent à mesure que l'énergie accumulée augmente car les tensions sont susceptibles d'atteindre plusieurs dizaines de kilovolts.

L'invention a donc pour but de proposer une sonde de génération d'ondes sismiques permettant une efficacité améliorée tant dans la quantité d'énergie accumulée pour un volume donné que dans la facilité d'assemblage de la sonde.

L'invention vise également une telle sonde présentant une sécurité améliorée contre les courts-circuits intempestifs.

L'invention vise encore une telle sonde dont le diamètre est optimisé par rapport à la quantité d'énergie disponible dans la batterie de condensateurs.

L'invention vise en outre une telle sonde qui puisse être utilisée à grande profondeur, par exemple à plusieurs kilomètres de profondeur, sans détérioration liée à la température ou à la pression.

L'invention vise de plus à fournir une telle sonde qui soit facilement transportable.

L'invention vise aussi une telle sonde dont la batterie de condensateurs puisse être facilement adaptée à des besoins de puissance variable en fonction de l'utilisation.

Pour ce faire, l'invention concerne une sonde de génération d'ondes sismiques, comprenant au moins :
- un corps tubulaire allongé selon un axe principal et présentant une première extrémité reliée à un câble d'alimentation électrique,
- une batterie de condensateurs, agencée à l'intérieur du corps et adaptée pour accumuler une quantité d'énergie électrique et pour restituer cette énergie selon un régime de décharge,
- un éclateur, installé à une seconde extrémité du corps opposée à la première extrémité et relié à la batterie de condensateurs, adapté pour générer une onde sismique sous l'effet de la restitution de l'énergie accumulée par la batterie de condensateurs,
caractérisée en ce que :
- la batterie de condensateurs comprend une tige conductrice, dite électrode centrale, formée d'au moins un segment de tige et s'étendant coaxialement à l'axe principal du corps le long de la batterie de condensateurs,
- la batterie de condensateurs est formée de condensateurs cylindriques comportant des bases présentant chacune une polarité différente,
- les condensateurs comportent un évidement axial et sont montés coaxialement entre eux autour de l'électrode centrale, parallèlement à l'axe principal du corps, et
- les condensateurs sont reliés électriquement selon au moins deux groupes de condensateurs connectés en parallèle, chaque groupe de condensateurs comportant au moins un condensateur et présentant un pôle positif et un pôle négatif, lesdits groupes étant agencés dans le corps pour que les pôles en regard de deux groupes adjacents soient de même polarité.

Afin d'augmenter la capacité totale de la batterie de condensateurs, plusieurs groupes de condensateurs sont assemblés en parallèle de manière à multiplier la capacité d'un groupe par le nombre de groupes. Cependant, lorsqu'on agence les groupes de condensateurs en enfilade dans le corps de la sonde, il y a un fort risque de court-circuit ou d'arc électrique entre le pôle négatif d'un groupe et le pôle positif du groupe suivant si ceux-ci sont au voisinage l'un de l'autre. Afin de limiter ces risques, l'invention prévoit d'agencer les groupes de condensateurs tête-bêche, en mettant en contact entre eux les pôles d'une même polarité de deux groupes adjacents. On peut ainsi augmenter encore la compacité de la batterie de condensateurs dès lors qu'il n'est plus nécessaire de prévoir un espacement d'isolement entre deux groupes de condensateurs. L'électrode centrale permet ainsi de disposer d'un pôle électrique complémentaire du corps de la sonde, sur toute la longueur de celle-ci. À cette fin, l'électrode centrale peut être divisée en plusieurs segments connectés bout à bout. Les condensateurs utilisés sont formés par un enroulement de deux feuilles conductrices formant électrodes, séparées par une feuille de matériau diélectrique. Les feuilles sont enroulées autour d'un mandrin tubulaire creux et chaque feuille conductrice est reliée respectivement à une des bases du cylindre ainsi formé. L'électrode centrale permet ainsi d'aligner mécaniquement les condensateurs.

Avantageusement et selon l'invention, les condensateurs d'un même groupe sont connectés en série. Grâce à l'utilisation de condensateurs cylindriques dont les électrodes sont connectées aux bases, il est possible de constituer la batterie de condensateurs de manière compacte, en empilant les condensateurs, la base négative de l'un au contact de la base positive du suivant, pour en faire un montage en série. De cette manière, la tenue en tension d'un groupe de condensateurs identiques ainsi montés est égale au produit de la tenue en tension d'un condensateur par le nombre de condensateurs du groupe.

Avantageusement et selon l'invention, les pôles positifs en regard de groupes de condensateurs adjacents sont électriquement reliés entre eux et à l'électrode centrale par une bague de contact, dite bague positive. Les pôles positifs de deux groupes de condensateurs adjacents sont reliés entre eux par une bague conductrice comportant une lame ou un balai de contact central adapté pour réaliser une connexion électrique avec l'électrode centrale. L'électrode centrale représente donc le pôle positif de la batterie de condensateurs, pôle accessible de tout endroit le long de la batterie de condensateurs.

Avantageusement et selon l'invention, l'évidement axial des condensateurs est isolé de l'électrode centrale par un fourreau isolant interrompu en regard de la bague positive. Ainsi un fourreau isolant continu recouvre la paroi de l'évidement axial des condensateurs et s'étend d'un pôle positif d'un groupe jusqu'au pôle positif d'un autre groupe adjacent par son pôle négatif, de manière à isoler les condensateurs et la bague négative de l'électrode centrale, à l'exception des pôles positifs respectifs de ces deux groupes qui sont connectés à l'électrode centrale par leur bague positive respective. Selon une variante, chaque condensateur comporte un mandrin axial tubulaire isolant et les bagues négatives reliant deux groupes adjacents sont également isolées de l'électrode centrale par une douille isolante. Dans cette variante, l'isolation électrique est réalisée par une isolation individuelle de chaque élément.

Avantageusement et selon l'invention, les pôles négatifs en regard de groupes de condensateurs adjacents sont reliés entre eux et à une paroi interne conductrice du corps tubulaire par une bague de contact, dite bague négative, adaptée pour coulisser à l'intérieur de ladite paroi. De manière analogue aux pôles positifs, les pôles négatifs des groupes de condensateurs adjacents sont reliés entre eux par une bague conductrice comportant un balai ou une lame de contact périphérique adapté pour réaliser un contact électrique avec la face interne du corps de la sonde si ce corps est métallique (conducteur) ou le cas échéant sur une surface conductrice plaquée sur la paroi interne du corps si ce corps est isolant. La paroi interne conductrice du corps de la sonde forme ainsi le deuxième pôle de la batterie de condensateur, également accessible de chaque extrémité de chaque tronçon formant la batterie de condensateurs. Le montage coulissant des bagues négatives à l'intérieur du corps tubulaire de la sonde permet d'agencer les condensateurs autours de l'électrode centrale puis d'engager l'ensemble dans le corps tubulaire, permettant ainsi de se dispenser d'une ouverture radiale de celui-ci. Ainsi, en utilisant une électrode centrale positive et une électrode négative formée par le corps de la sonde, le facteur dimensionnant du diamètre de la sonde est le diamètre des condensateurs, ce qui permet de réduire le diamètre de la sonde par rapport aux sondes connues.

Avantageusement et selon l'invention, les condensateurs sont agencés à l'intérieur d'une gaine isolante interrompue en regard de la bague négative. Ainsi une gaine isolante continue recouvre la paroi radiale externe des condensateurs de deux groupes adjacents par leur pôle positif, ainsi que celle de la bague positive, de manière à pouvoir installer les condensateurs dans le corps tubulaire de la sonde, lorsque celui-ci est conducteur, en occupant sensiblement tout l'espace creux du corps sans pour autant générer de court-circuit entre la paroi radiale externe du condensateur et le corps de la sonde. Dans une variante, la paroi radiale externe de chaque condensateur est recouverte par une gaine isolante individuelle, de même que la paroi externe de la bague positive, assurant ainsi l'isolation électrique vis-à-vis du corps de manière individuelle pour chaque élément.

Avantageusement et selon l'invention, le corps de la sonde comprend une pluralité de tronçons emboitables et la batterie de condensateurs est constituée d'au moins un tronçon comportant au moins deux groupes de condensateurs. Lorsqu'il est nécessaire d'avoir une forte puissance embarquée dans la sonde, la batterie de condensateurs peut comprendre de nombreux groupes de condensateurs, représentant une longueur non négligeables. En pratique, de telles sondes peuvent atteindre de 10 à 20 mètres de long et un poids considérable, ce qui est susceptible de poser des problèmes de transport et de manutention. L'invention prévoit à cet effet de diviser la sonde en multiples tronçons, comportant par exemple un premier tronçon hébergeant les éléments électroniques de charge et de commande de la batterie de condensateurs, un tronçon terminal à l'extrémité opposée de la sonde, comportant l'éclateur, et au moins un tronçon intermédiaire accueillant tout ou partie de la batterie de condensateurs. Outre l'avantage de limiter le poids et la taille de chaque tronçon, cette disposition permet de rajouter un ou plusieurs tronçons intermédiaires pour augmenter la puissance de la batterie de condensateurs embarquée dans la sonde.

Avantageusement et selon l'invention, chaque extrémité d'un tronçon de la sonde comporte des moyens de connexion électriques reliés respectivement à l'électrode centrale et au corps tubulaire, adaptés pour coopérer avec des moyens conjugués placés à une extrémité opposée du tronçon adjacent. Chaque tronçon de la batterie de condensateurs comporte ainsi une fiche centrale reliée à une extrémité de l'électrode centrale et adaptée à coopérer avec une extrémité opposée en forme de douille de l'électrode centrale du tronçon adjacent. Ainsi, par le simple emboitement de deux tronçons formant partie de la batterie de condensateurs, la connexion électrique de l'électrode centrale est réalisée entre les deux tronçons. Il en va de même du deuxième pôle de la batterie de condensateurs qui est connecté entre les deux tronçons par l'emboitement du corps tubulaire d'un tronçon dans celui du tronçon adjacent.

Avantageusement et selon l'invention, chaque tronçon comporte des moyens de compensation d'allongement des condensateurs du tronçon. Une sonde selon l'invention est susceptible d'être descendue dans un puits de forage jusqu'à des profondeurs de quelques kilomètres. De ce fait la température d'opération de chaque tronçon de la sonde peut varier entre une température ambiante régnant à la surface (±30°C par exemple) et des températures de l'ordre de 160°C au fond du puits. Les différents éléments de la sonde, en particulier le corps tubulaire, l'électrode centrale et les condensateurs peuvent alors se dilater et présenter des coefficients d'allongement différents. Afin d'éviter que les bases des condensateurs ne s'écartent les unes des autres et ne créent des faux contacts sous l'effet d'une dilatation supérieure de l'électrode centrale, des moyens de compensation sont prévus pour toujours exercer un effort axial de serrage positif des condensateurs entre eux.

Avantageusement et selon l'invention, lesdits moyens de compensation d'allongement comprennent un dispositif élastique fixé sur une extrémité de l'électrode centrale et exerçant une force de compression axiale sur les condensateurs du tronçon. Les condensateurs d'un même tronçon, ainsi que leurs bagues de contact et de raccordement sont montés coulissants sur l'électrode centrale, et serrés les uns contre les autres à au moins l'une des extrémités de cette électrode centrale par un ressort, par exemple sous la forme de rondelles coniques fixées par un écrou à l'électrode centrale.

Avantageusement et selon l'invention, chaque tronçon est rempli d'un fluide isolant et comporte des moyens de compensation de dilatation dudit fluide isolant. Afin d'augmenter la rigidité diélectrique de l'ensemble de la batterie de condensateurs, chaque tronçon est rempli d'un fluide isolant, par exemple une huile minérale à forte constante diélectrique servant également à l'imprégnation des condensateurs. Chaque tronçon de la sonde est rempli d'huile sous pression et doit être étanche afin de ne pas gêner les manipulations d'assemblage de la sonde. Chaque tronçon comporte donc des moyens de pressurisation et de compensation des dilatations thermiques de l'huile ainsi embarquée.

Avantageusement et selon l'invention, lesdits moyens de compensation de dilatation comprennent une chambre pressurisée à volume variable. Ainsi chaque tronçon comporte un cylindre creux séparé en deux par un piston mobile, une première chambre, dite chambre pressurisée étant en communication fluidique avec le fluide isolant et une deuxième chambre remplie par un gaz sous pression permettant ainsi la dilatation du fluide isolant.

L'invention concerne également une sonde de génération d'ondes sismiques caractérisée en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 représente un schéma d'une sonde selon l'invention,
- la figure 2 est une vue en coupe d'un tronçon formant partie d'une batterie de condensateurs équipant une sonde selon l'invention,
- la figure 3 est une vue de détail en coupe d'un agencement de deux groupes de condensateurs faisant partie de la batterie de condensateurs,
- la figure 4 est une vue de détail en coupe de la connexion de deux pôles positifs de deux groupes de condensateurs adjacents,
- la figure 5 est un schéma électrique montrant un exemple d'agencement électrique d'un tronçon de la sonde selon l'invention,
- la figure 6 est une vue en coupe des moyens d'assemblage de deux tronçons d'une sonde selon l'invention, et
- la figure 7 est une vue de détail des moyens de serrage et de compensation d'allongement des condensateurs d'un tronçon de la sonde selon l'invention.

Dans la suite de la description, des éléments identiques sont désignés par une même référence, sauf lorsqu'il est nécessaire de les différencier pour la clarté de l'exposé. Dans ce cas, leur référence est affectée d'un glyphe prime ('), seconde ("), etc.

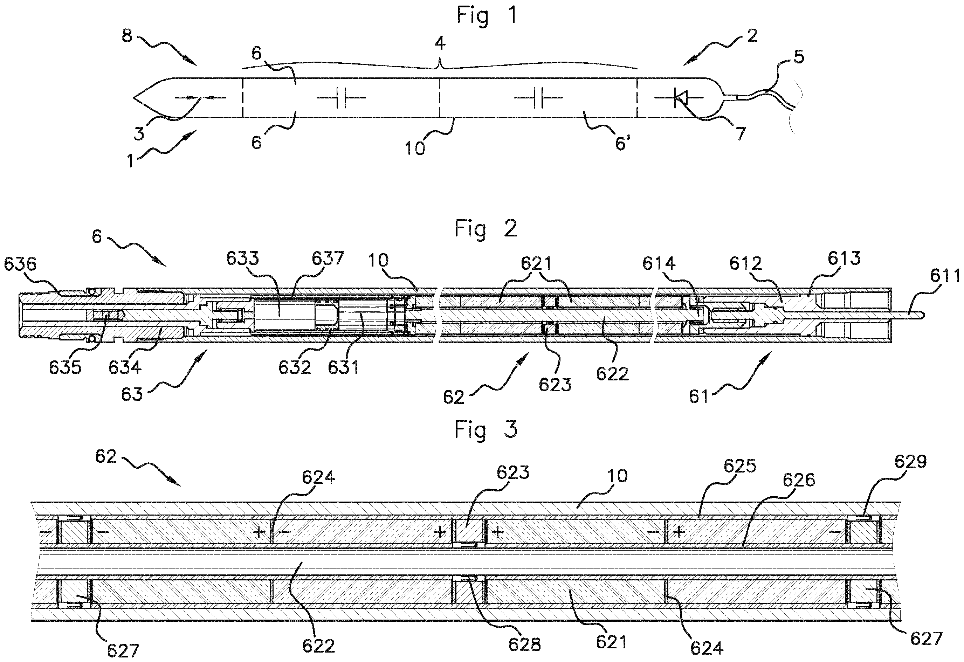

La figure 1 représente schématiquement une sonde 1 de génération d'ondes sismiques, qui se présente sous la forme d'un corps 10 tubulaire allongé comportant à une première extrémité 2 un tronçon contenant par exemple des éléments 7 électriques et électroniques tels que transformateur élévateur de tension, redresseurs, dispositifs de commande, etc.), cette première extrémité 2 étant reliée à un câble 5 permettant d'une part l'alimentation électrique de la sonde, par exemple en courant alternatif à une tension compatible avec la tenue du câble et sa longueur et assurant d'autre part la liaison mécanique de la sonde avec un treuil permettant de déplacer la sonde dans un puits de forage. La sonde 1 comporte à une seconde extrémité du corps 10, opposée au câble 5, un tronçon final 8 comprenant un éclateur 3 permettant de former un (ou plusieurs) arc(s) électrique(s) dans un milieu liquide de manière à vaporiser celui-ci en un temps très court pour générer une onde de pression ou une onde de choc capable de se propager dans la roche avoisinante. L'éclateur 3 peut être placé dans une cavité du corps 10 ouverte vers l'extérieur et utiliser de l'eau remplissant le puits de forage ou bien être placé dans une partie isolée du milieu extérieur par une paroi souple permettant la transmission des ondes de choc et baigner dans un fluide approprié. L'éclateur 3 est électriquement relié, directement ou par l'intermédiaire d'un dispositif de commutation, à une source d'énergie de forte puissance constituée par une batterie 4 de condensateurs placée en partie médiane du corps 10. La batterie 4 comprend un ou plusieurs tronçons 6, 6' emboitables les uns dans les autres et contenant chacun un agencement de condensateurs propre à accumuler de l'énergie électrique en provenance du câble 5 et à la restituer à l'éclateur 3.

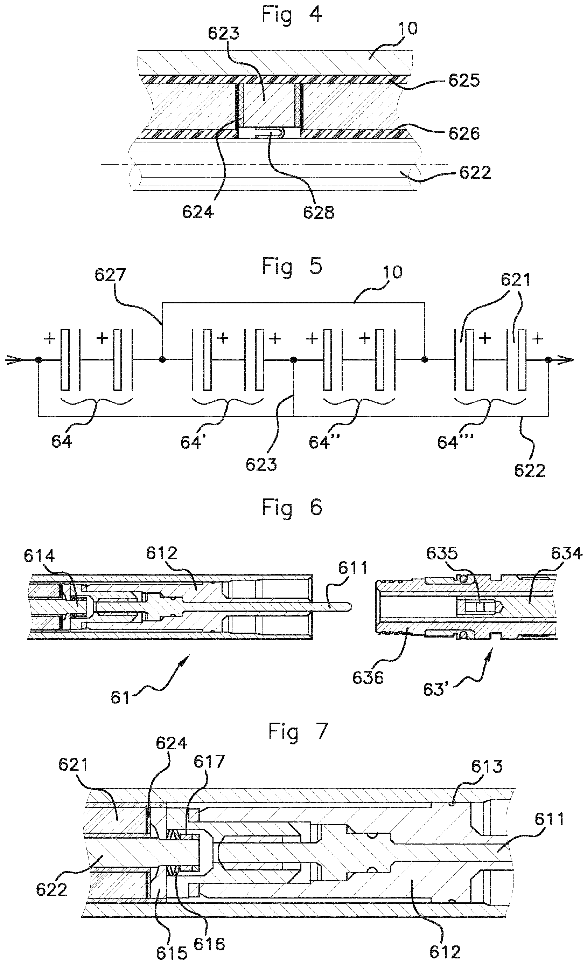

On se réfère à la figure 2 où on a représenté une coupe longitudinale d'un tronçon 6 faisant partie de la batterie 4 de condensateurs. Le tronçon 6 comporte trois parties :
- une partie avant 61 qui comprend des moyens de connexion (broche 611 de connexion) avec la partie arrière 63' d'un tronçon 6' adjacent et des moyens de compensation d'allongement 614 des condensateurs logés dans la partie intermédiaire 62 du tronçon 6 ;
- une partie intermédiaire 62 qui sera détaillée plus avant en relation avec les figures 3 à 5 et qui comporte des condensateurs 621, une électrode centrale 622 et des bagues de connexion 623 (et 627 figure 3) ; et
- une partie arrière 63 qui comprend un vase d'expansion 637 pour compenser la dilatation d'un fluide isolant baignant tout le tronçon 6, un culot 636 adapté pour être emboité dans la partie avant 61 d'un tronçon adjacent (figure 6) comprenant une douille 635 de connexion coopérant avec la broche 611 de connexion.

La partie intermédiaire 62 abrite des condensateurs 621 qui sont agencés en groupes 64 (figure 5) de condensateurs, les condensateurs d'un même groupe étant montés en série et les groupes étant reliés en parallèle entre eux. La figure 5 représente un schéma électrique d'un exemple d'agencement de condensateurs comprenant quatre groupes 64, 64', 64" et 64"' de deux condensateurs 621 reliés par les pôles positifs de chaque groupe à un conducteur de polarité positive représenté par l'électrode centrale 622 et par les pôles négatifs de ces groupes à un conducteur de polarité négative représenté par le corps 10. Un tel agencement permet d'obtenir une batterie ou un élément de batterie de condensateurs présentant une tension maximale de service double et une capacité quadruple de celle d'un condensateur individuel tout en évitant une trop grande proximité entre les pôles positifs et négatifs des différents groupes de condensateurs.

Un tel agencement est partiellement représenté dans son aspect mécanique à la figure 3 qui montre deux groupes de deux condensateurs correspondant aux groupes 64' et 64" de la figure 5. Chaque condensateur 621 se présente sous une forme cylindrique comportant un évidement central le long de son axe. De tels condensateurs sont en général réalisés en enroulant deux films métalliques séparés par un film diélectrique autour d'un mandrin central creux. Chaque film métallique est respectivement relié électriquement à l'une ou l'autre des deux bases du cylindre formé par l'enroulement, chaque base étant métallisée et formant ainsi une électrode de polarité opposée à celle de l'autre base. Avantageusement, le condensateur présente un diamètre extérieur permettant de l'insérer dans le diamètre intérieur du corps tubulaire 10.

Les condensateurs 621 sont installés coaxialement dans la partie intermédiaire 62 du tronçon 6 autour d'une tige métallique conductrice, par exemple une tige en laiton de 15 à 25 mm de diamètre, formant une électrode centrale 622.

À l'intérieur d'un même groupe, les pôles opposés de deux condensateurs adjacents sont mis en contact par une rondelle de contact 624 par exemple en métal déployé. Les groupes de condensateurs sont installés sur l'électrode centrale 622 de manière à ce que les pôles positifs de deux groupes adjacents soient connectés entre eux par une bague métallique, dite bague positive 623, le cas échéant par l'intermédiaire de rondelles de contact 624 de chaque côté de la bague positive, comme représenté sur le détail de la figure 4. La bague positive 623 est en contact avec l'électrode centrale 622 par une languette conductrice 628 formant un balai de contact avec la surface de l'électrode centrale.

De manière analogue, les pôles négatifs de deux groupes adjacents sont connectés entre eux par une bague métallique, dite bague négative 627, qui comporte une languette conductrice 629 sur son enveloppe radiale externe de manière à assurer un contact électrique coulissant avec la face interne métallique du corps 10 qui remplit ainsi une fonction d'électrode négative.

Les condensateurs 621, les bagues de contact 624 et la bague négative 627 qui forment deux groupes adjacents par leur pôle négatif sont isolés de l'électrode centrale 622 par un fourreau isolant 626. Le fourreau isolant 626 s'étend donc continument entre deux bagues positives 623 consécutives et n'est interrompu qu'en regard de ces bagues positives pour permettre le contact de celles-ci avec l'électrode centrale.

De même, les condensateurs 621, les bagues de contact 624 et la bague positive 623 qui forment deux groupes adjacents par leur pôle positif sont isolés du corps 10 par une gaine isolante 625 qui s'étend continument entre deux bagues négatives 627 consécutives et n'est interrompue qu'en regard de celles-ci pour permettre le contact électrique avec la surface métallique de l'intérieur du corps 10.

De manière alternative ou en combinaison, les condensateurs 621 peuvent comporter un mandrin isolant et la bague négative 627 comporte également une enveloppe radiale interne isolante en regard de l'électrode centrale 622 de manière à assurer une isolation électrique élément par élément. De même, l'enveloppe radiale externe des condensateurs 621 et de la bague positive 623 peut être recouverte individuellement par une couche d'isolant.

Grâce à ce montage, les condensateurs 621 sont agencés coaxialement à l'électrode centrale 622 et fixés sur celle-ci. Cet ensemble peut ainsi être glissé dans la partie intermédiaire 62 du corps tubulaire 10 du tronçon 6, les bagues négatives 627 réalisant, par leur languette conductrice 629 le contact électrique avec le corps tubulaire 10.

Il convient cependant de noter qu'en raison des grandes variations de température auxquelles une telle sonde peut être soumise, par exemple depuis une température en surface pouvant atteindre -30°C pour un forage dans des régions froides (Arctique, Sibérie, etc.) jusqu'à une température de l'ordre de 160°C à quelques kilomètres de profondeur, il est nécessaire de prévoir des moyens de compensation d'allongement de l'ensemble des condensateurs et bagues montés sur l'électrode centrale. Celle-ci est en effet susceptible de s'allonger en température avec un allongement supérieur à celui des condensateurs, risquant ainsi d'entrainer une dégradation voire une rupture du contact entre les bases des condensateurs. Ainsi, des moyens 614 de compensation d'allongement sont prévus à la jonction entre la partie intermédiaire 62 et la partie avant 61 du tronçon. Ces moyens 614 de compensation d'allongement sont décrits en relation avec la figure 7. Ils comportent une rondelle de pression 615 engagée sur l'électrode centrale 622 en contact avec la base positive du dernier condensateur 621, par l'intermédiaire, le cas échéant d'une rondelle de contact 624. Un dispositif élastique formé par exemple de deux rondelles coniques 616 serrées par un écrou 617 vissé sur l'électrode centrale exerce un effort de compression sur la rondelle de pression 615 et par suite sur l'ensemble des condensateurs montés sur l'électrode centrale.

La partie avant 61 du tronçon 6 comprend également une fiche 611 conductrice reliée à l'électrode centrale 622. Cette fiche 611 est enrobée d'un manchon 612 isolant permettant de la centrer par rapport au corps du tronçon et de l'isoler de l'électrode négative. Le manchon 612 comporte au moins pour partie un diamètre extérieur correspondant au diamètre intérieur du corps 10 et des moyens d'étanchéité, par exemple un joint torique 613, logé à l'extrémité du manchon afin de réaliser l'étanchéité interne du tronçon lorsque celui-ci est rempli de fluide isolant comme on le décrit par la suite.

La figure 6 montre les moyens d'assemblage entre la partie avant 61 d'un premier tronçon et la partie arrière 63' de deux tronçons 6 et 6' adjacents. La fiche 611 s'engage dans le culot 636 de la partie arrière 63' et vient contacter une douille 635 de diamètre adapté pour réaliser la continuité électrique entre l'électrode centrale 622 du premier tronçon et une tige conductrice 634, elle-même en liaison électrique avec l'électrode centrale 622 du deuxième tronçon. De même, la partie externe du culot 636 vient s'engager dans l'espace annulaire entre la fiche 611 et l'extrémité du corps tubulaire 10 du manchon pour former un contact électrique assurant la continuité électrique entre les corps tubulaires des deux tronçons.

On revient à la figure 2 pour détailler les caractéristiques de la partie arrière 63 du tronçon 6. Afin d'améliorer la rigidité diélectrique de la batterie de condensateurs, il est fréquent de noyer les condensateurs dans un fluide isolant tel qu'une huile minérale permettant d'améliorer l'isolation entre éléments de polarité différente. Cependant, ce fluide isolant, soumis aux variations de température décrites plus haut, se dilate et génère des pressions internes dans chaque tronçon susceptibles d'endommager les composants du tronçon, par exemple les gaines isolantes, la paroi du tronçon, les manchons d'extrémités et même la batterie de condensateurs. La partie arrière 63 comprend donc des moyens de compensation de dilatation du fluide sous la forme d'un vase d'expansion 637 cylindrique comportant une chambre de pressurisation 631 en communication avec le fluide isolant et remplie de ce fluide, un piston 632 séparant la chambre de pressurisation 631 d'une deuxième chambre 633 remplie de gaz sous pression. Ainsi les variations de volume du fluide isolant peuvent être absorbées par la variation de position du piston 632 tout en conservant une pression minimale correspondant à la pression du gaz dans la chambre 633.

Le corps du vase d'expansion 637 est en matériau conducteur, relié d'une part par son extrémité correspondant à la chambre 631 à l'électrode centrale 622 et d'autre part par son extrémité correspondant à la chambre 633 à la tige conductrice 634 à laquelle est reliée la douille 635. La continuité électrique entre la douille 635 (et donc la fiche 611 du tronçon précédent) et l'électrode centrale 622 est ainsi assurée. Le corps du vase d'expansion 637 est en outre revêtu d'une couche d'isolant permettant de l'isoler du corps tubulaire 10 qui forme l'électrode négative.

On a ainsi décrit une sonde de génération d'ondes sismiques dans laquelle une batterie de condensateurs est agencée coaxialement et dont les pôles sont formés d'une électrode centrale positive entourée par un corps tubulaire de polarité négative. Grâce à l'agencement particulier des condensateurs en groupes de condensateurs montés tête-bêche, les pôles de polarité différente ne sont pas placés au voisinage l'un de l'autre et les risques de court-circuit sont minimisés.

Bien entendu d'autres agencements que celui décrit ci-dessus à la figure 5 (quatre groupes de deux condensateurs) peuvent être envisagés en fonction des caractéristiques électriques recherchées, par exemple deux groupes de trois condensateurs en série ou six groupes en parallèle comprenant chacun un unique condensateur.

De même, cette description est donnée à titre d'exemple illustratif uniquement et l'homme du métier pourra y apporter de nombreuses modifications sans sortir de la portée de l'invention, comme par exemple modifier les places respectives des moyens de compensation d'allongement des condensateurs et des moyens de compensation de dilatation du fluide, voire les disposer tous deux d'un même côté de la partie intermédiaire du tronçon.

## Revendications

1. - Sonde (1) de génération d'ondes sismiques, comprenant au moins :
- un corps (10) tubulaire allongé selon un axe principal et présentant une première extrémité (2) reliée à un câble (5) d'alimentation électrique,
- une batterie (4) de condensateurs, agencée à l'intérieur du corps (10) et adaptée pour accumuler une quantité d'énergie électrique et pour restituer cette énergie selon un régime de décharge,
- un éclateur (3), installé à une seconde extrémité du corps opposée à la première extrémité et relié à la batterie de condensateurs, adapté pour générer une onde sismique sous l'effet de la restitution de l'énergie accumulée par la batterie de condensateurs,
**caractérisée en ce que** :
• la batterie (4) de condensateurs comprend une tige conductrice, dite électrode centrale (622), formée d'au moins un segment de tige et s'étendant coaxialement à l'axe principal du corps (10) le long de la batterie de condensateurs,
• la batterie (4) de condensateurs est formée de condensateurs (621) cylindriques comportant des bases présentant chacune une polarité différente,
• les condensateurs (621) comportent un évidement axial et sont montés coaxialement entre eux autour de l'électrode centrale (622), parallèlement à l'axe principal du corps, et
• les condensateurs (621) sont reliés électriquement selon au moins deux groupes (64, 64', 64", 64"') de condensateurs connectés en parallèle, chaque groupe de condensateurs comportant au moins un condensateur et présentant un pôle positif et un pôle négatif, lesdits groupes étant agencés dans le corps (10) pour que les pôles en regard de deux groupes adjacents soient de même polarité.

2. - Sonde selon la revendication 1, **caractérisée en ce que** les condensateurs (621) d'un même groupe (64) sont connectés en série.

3. - Sonde selon l'une quelconque des revendications 1 ou 2, **caractérisée en ce que** les pôles positifs en regard de groupes (64', 64") de condensateurs adjacents sont électriquement reliés entre eux et à l'électrode centrale (622) par une bague de contact, dite bague positive (623).

4. - Sonde selon la revendication 3, **caractérisée en ce que** l'évidement axial des condensateurs est isolé de l'électrode centrale (622) par un fourreau (626) isolant interrompu en regard de la bague positive (623).

5. - Sonde selon l'une quelconque des revendications 1 à 4, **caractérisée en ce que** les pôles négatifs en regard de groupes (64, 64') de condensateurs adjacents sont reliés entre eux et à une paroi interne conductrice du corps (10) tubulaire par une bague de contact, dite bague négative (627), adaptée pour coulisser à l'intérieur de ladite paroi.

6. - Sonde selon la revendication 5 **caractérisée en ce que** les condensateurs (621) sont agencés à l'intérieur d'une gaine (625) isolante interrompue en regard de la bague négative (627).

7. - Sonde selon l'une quelconque des revendications 1 à 6, **caractérisée en ce que** le corps (10) de la sonde comprend une pluralité de tronçons (6, 6') emboitables et **en ce que** la batterie (4) de condensateurs est constituée d'au moins un tronçon (6) comportant au moins deux groupes (64', 64") de condensateurs (621).

8. - Sonde selon la revendication 7, **caractérisée en ce que** chaque extrémité d'un tronçon (6) de la sonde comporte des moyens (611, 635) de connexion électriques reliés respectivement à l'électrode centrale (622) et au corps (10) tubulaire, adaptés pour coopérer avec des moyens conjugués placés à une extrémité opposée du tronçon adjacent.

9. - Sonde selon l'une quelconque des revendications 7 ou 8, **caractérisée en ce que** chaque tronçon (6) comporte des moyens (614) de compensation d'allongement des condensateurs (621) du tronçon.

10. - Sonde selon la revendication 9, **caractérisée en ce que** lesdits moyens (614) de compensation d'allongement comprennent un dispositif élastique (616) fixé sur une extrémité de l'électrode centrale (622) et exerçant une force de compression axiale sur les condensateurs (621) du tronçon.

11. - Sonde selon l'une quelconque des revendications 7 à 10, **caractérisée en ce que** chaque tronçon (6) est rempli d'un fluide isolant et comporte des moyens (637) de compensation de dilatation dudit fluide isolant.

12. - Sonde selon la revendication 11, **caractérisée en ce que** lesdits moyens (637) de compensation de dilatation comprennent une chambre (631) pressurisée à volume variable.

## Patentansprüche

1. Sonde (1) zum Erzeugen von seismischen Wellen, mindestens umfassend:
- einen röhrenförmigen Körper (10), ausgestreckt entlang einer Hauptachse und ein mit einem Stromversorgungskabel (5) verbundenes erstes Ende (2) aufweisend,
- eine Kondensatorenbatterie (4), im Inneren des Körpers (10) angeordnet und ausgelegt, um eine Menge elektrischer Energie zu akkumulieren und diese Energie gemäß einer Entladerate abzugeben,
- eine Entladestrecke (3), installiert an einem zweiten Ende des Körpers, dem ersten Ende gegenüberliegend und mit der Kondensatorenbatterie verbunden, ausgelegt, um unter der Wirkung der Abgabe der akkumulierten Energie durch die Kondensatorenbatterie eine seismische Welle zu erzeugen,
**dadurch gekennzeichnet, dass**:
• die Kondensatorenbatterie (4) einen leitfähigen Schaft, die Mittelelektrode (622), gebildet aus mindestens einem Schaftsegment, und sich koaxial mit der Hauptachse des Körpers (10) der Länge der Kondensatorenbatterie nach erstreckend, umfasst,
• die Kondensatorenbatterie (4) aus zylindrischen Kondensatoren (621) gebildet ist, Basen umfassend, von denen jede eine unterschiedliche Polarität aufweist,
• die Kondensatoren (621) eine axiale Aussparung umfassen und untereinander koaxial um die Mittelelektrode (622), parallel zur Hauptachse des Körpers, montiert sind, und
• die Kondensatoren (621) elektrisch entlang mindestens zwei Gruppen (64, 64', 64", 64"') von parallel geschalteten Kondensatoren verbunden sind, wobei jede Gruppe von Kondensatoren mindestens einen Kondensator umfasst und einen positiven Pol und einen negativen Pol aufweist, wobei die Gruppen in dem Körper (10) angeordnet sind, sodass die Pole hinsichtlich der zwei benachbarten Gruppen von gleicher Polarität sind.

2. Sonde nach Anspruch 1, **dadurch gekennzeichnet, dass** die Kondensatoren (621) einer gleichen Gruppe (64) in Serie geschaltet sind.

3. Sonde nach einem der Ansprüche 1 oder 2, **dadurch gekennzeichnet, dass** die positiven Pole hinsichtlich der Gruppen (64', 64") von benachbarten Kondensatoren elektrisch untereinander und mit der Mittelelektrode (622) durch einen Kontaktring, den positiven Ring (623), verbunden sind.

4. Sonde nach Anspruch 3, **dadurch gekennzeichnet, dass** die axiale Aussparung der Kondensatoren von der Mittelelektrode (622) durch eine hinsichtlich des positiven Rings (623) unterbrochene isolierende Hülle (626) isoliert ist.

5. Sonde nach einem der Ansprüche 1 bis 4, **dadurch gekennzeichnet, dass** die negativen Pole hinsichtlich der Gruppen (64, 64') von benachbarten Kondensatoren untereinander und mit einer internen leitfähigen Wand des röhrenförmigen Körpers (10) durch einen Kontaktring, den negativen Ring (627), ausgelegt zum Gleiten ins Innere der Wand, verbunden sind.

6. Sonde nach Anspruch 5, **dadurch gekennzeichnet, dass** die Kondensatoren (621) im Inneren einer hinsichtlich des negativen Rings (627) unterbrochenen isolierenden Ummantelung (625) angeordnet sind.

7. Sonde nach einem der Ansprüche 1 bis 6, **dadurch gekennzeichnet, dass** der Körper (10) der Sonde eine Vielzahl von staffelbaren Teilabschnitten (6, 6') umfasst, und dadurch, dass die Kondensatorenbatterie (4) aus mindestens einem Teilabschnitt (6) besteht, der mindestens zwei Gruppen (64', 64") von Kondensatoren (621) umfasst.

8. Sonde nach Anspruch 7, **dadurch gekennzeichnet, dass** jedes Ende eines Teilabschnitts (6) der Sonde elektrische Anschlussmittel (611, 635) umfasst, verbunden mit jeweils der Mittelelektrode (622) und mit dem röhrenförmigen Körper (10), ausgelegt zum Kooperieren mit den an einem gegenüberliegenden Ende des benachbarten Teilabschnitts platzierten Konjugationsmitteln.

9. Sonde nach einem der Ansprüche 7 oder 8, **dadurch gekennzeichnet, dass** jeder Teilabschnitt (6) Kompensationsmittel (614) der Verlängerung der Kondensatoren (621) des Teilabschnitts umfasst.

10. Sonde nach Anspruch 9, **dadurch gekennzeichnet, dass** die Kompensationsmittel (614) der Verlängerung eine elastische Vorrichtung (616) umfassen, die an einem Ende der Mittelelektrode (622) fixiert ist und eine axiale Kompressionskraft auf die Kondensatoren (621) des Teilabschnitts ausübt.

11. Sonde nach einem der Ansprüche 7 bis 10, **dadurch gekennzeichnet, dass** jeder Teilabschnitt (6) mit einem isolierenden Fluid gefüllt ist und Kompensationsmittel (637) der Ausdehnung des isolierenden Fluids umfasst.

12. Sonde nach Anspruch 11, **dadurch gekennzeichnet, dass** die Kompensationsmittel (637) der Ausdehnung eine unter Druck gesetzte Kammer (631) mit variablem Volumen umfassen.

## Claims

1. - Probe (1) for generating seismic waves, comprising at least:
- a tubular body (10) which is elongate in a main axis and has a first end (2) linked to an electrical power cable (5),
- a capacitor bank (4) arranged inside the body (10) and suitable for storing an amount of electrical energy and for releasing this energy in accordance with a discharge pattern,
- a spark gap (3) installed at a second end of the body opposite the first end and linked to the capacitor bank, suitable for generating a seismic wave under the effect of the release of the energy stored by the capacitor bank,
**characterised in that**:
• the capacitor bank (4) comprises a conductive rod, named a central electrode (622), formed from at least one rod segment and extending coaxially to the main axis of the body (10) along the capacitor bank,
• the capacitor bank (4) is formed from cylindrical capacitors (621) comprising bases each having a different polarity,
• the capacitors (621) have an axial recess and are mounted coaxially to each other about the central electrode (622), parallel to the main axis of the body, and
• the capacitors (621) are electrically linked into at least two groups (64, 64', 64", 64"') of capacitors connected in parallel, each group of capacitors comprising at least one capacitor and having a positive pole and a negative pole, said groups being arranged in the body (10) such that the facing poles of two adjacent groups are of the same polarity.

2. - A probe according to claim 1, **characterised in that** the capacitors (621) of the same group (64) are connected in series.

3. - A probe according to any one of claims 1 or 2, **characterised in that** the facing positive poles of adjacent groups (64', 64") of capacitors are electrically linked to each other and to the central electrode (622) by a contact ring, named a positive ring (623).

4. - A probe according to claim 3, **characterised in that** the axial recess of the capacitors is insulated from the central electrode (622) by a discontinuous insulating sheath (626) facing the positive ring (623).

5. - A probe according to any one of claims 1 to 4, **characterised in that** the facing negative poles of adjacent groups (64, 64') of capacitors are linked to each other and to an inner conductive wall of the tubular body (10) by a contact ring, named a negative ring (627), suitable for sliding within said wall.

6. - A probe according to claim 5, **characterised in that** the capacitors (621) are arranged within a discontinuous insulating sleeve (625) facing the negative ring (627).

7. - A probe according to any one of claims 1 to 6, **characterised in that** the body (10) of the probe comprises a plurality of nestable sections (6, 6') and **in that** the capacitor bank (4) is formed of at least one section (6) comprising at least two groups (64', 64") of capacitors (621).

8. - A probe according to claim 7, **characterised in that** each end of a section (6) of the probe comprises electrical connection means (611, 635) linked respectively to the central electrode (622) and to the tubular body (10), suitable for cooperating with conjugated means placed at an opposite end of the adjacent section.

9. - A probe according to any one of claims 7 or 8, **characterised in that** each section (6) comprises means (614) for compensating for the elongation of the capacitors (621) of the section.

10. - A probe according to claim 9, **characterised in that** said elongation compensation means (614) comprise an elastic device (616) fixed on one end of the central electrode (622) and exerting an axial compression force on the capacitors (621) of the section.

11. - A probe according to any one of claims 7 to 10, **characterised in that** each section (6) is filled with an insulating fluid and comprises means (637) for compensating for the expansion of said insulating fluid.

12. - A probe according to claim 11, **characterised in that** said expansion compensation means (637) comprise a variable volume pressurised chamber (631).
